# EUROPÄISCHE PATENTSCHRIFT

(11) **EP 1 114 507 B1**
(45) Veröffentlichungstag und Bekanntmachung des Hinweises auf die Patenterteilung: **04.02.2004**
(21) Anmeldenummer: 99953646.9
(22) Anmeldetag: 01.09.1999
(51) Int. Cl.: H02M 3/335

(54) **SCHALTUNGSANORDNUNG UND VERFAHREN ZUR SELBSTGESTEUERTEN GLEICHRICHTUNG IN UMRICHTERN**
CIRCUIT AND METHOD FOR AUTOMATIC RECTIFICATION IN CONVERTERS
ENSEMBLE CIRCUIT ET PROCEDE POUR LE REDRESSEMENT AUTOREGULE DANS DES CONVERTISSEURS

(30) Priorität: 16.09.1998 DE 19842451
(43) Veröffentlichungstag der Anmeldung: 11.07.2001
(73) Patentinhaber: SIEMENS AKTIENGESELLSCHAFT, 80333 München (DE)
(72) Erfinder: BRAKUS, Bogdan, D-82131 Stockdorf (DE)
(86) Internationale Anmeldenummer: PCT/DE1999/002730
(87) Internationale Veröffentlichungsnummer: WO 2000/016470

(56) Entgegenhaltungen:
- DE-A- 4 315 906
- US-A- 5 144 547
- US-A- 5 430 640
- US-A- 5 774 350

## Beschreibung

Zur selbstgesteuerten Gleichrichtung von an der Sekundärseite eines Übertragers in einem Gleichspannungs/Gleichspannungs Umrichter anliegenden Spannungen ist eine Schaltungsanordnung aus dem Konferenzbuch Intelec 91, CH 2970-2/910000-0495$1.00, 1991, Seiten 496-498, Fig. 7 bekannt. Bei dieser Schaltungsanordnung zur Gleichrichtung der an der Sekundärseite anliegenden Spannungen werden zwei Schaltelemente über Kreuz angesteuert. Die Steuerspannungen für den jeweiligen Steuereingang der Schaltelemente werden an den Anschlüssen der sekundärseitig angeordneten Spulen des Übertragers abgegriffen.

Diese bekannte Schaltungsanordnung bringt jedoch den Nachteil mit sich, daß die Steuerspannung für die Schaltelemente nicht konstant gehalten wird und während des gesamten Schaltzyklus vorhanden ist. Diese Schaltungsanordnung ist darüber hinaus ungeeignet für Niederspannungsumrichter. Bei einer Spannung, von z.B. 2,5 oder 1,8 Volt ist eine ausreichende Ansteuerung für die Gleichrichter auf der Sekundärseite des Umrichters nicht mehr gegeben. Eine zu geringe Ansteuerspannung ergibt eine ungenügende Durchsteuerung der Schaltelemente. Durch die ungenügende Durchsteuerung verschlechtert sich der Wirkungsgrad der Schaltung.

Aus der Offenlegungsschrift DE 4315906 A1 ist eine Stromversorgungsschaltung mit einem induktiven Speicherelement zum Speichern elektrische Energie mit einer Schaltvorrichtung zum periodischen Zuführen der Energie zum Speicherelement bekannt. Bei dieser Schaltungsanordnung werden auftretende Querströme dadurch vermieden das eine logische Verriegelungsschaltung vorgesehen ist. Durch diese Verriegelungsschaltung die aus einer Vielzahl von Gatter- und Treiberelementen gebildet ist, wird eine Steuerung der Freilauf- bzw. des Gleichrichterbauteils durchgeführt. Die Ansteuerung der Verriegelungsschaltung erfolgt über eine Vielzahl von Schalteinheiten.

Der Erfindung liegt die Aufgabe zugrunde, eine weitere Schaltungsanordnung und ein Verfahren zur selbstgesteuerten Gleichrichtung bei Umrichtern für niedrige Ausgangsspannungen anzugeben, die die oben genannten Nachteile vermeidet.

Die Aufgabe wird durch die Merkmale der Patentansprüche 1 und 7 gelöst.

Die Erfindung bringt den Vorteil mit sich, daß bei einem DC/DC-Umrichter für niedrige Ausgangsspannungen eine Durchsteuerung der Schaltelemente sicher erfolgt.

Die Erfindung bringt den weiteren Vorteil mit sich, daß durch den Stromwandler eine besonders aufwandsarme Schaltungsausgestaltung möglich wird.

Weitere Besonderheiten sind in den Unteransprüchen angegeben.

Die Schaltungsanordnung und das Verfahren werden aus den nachfolgenden näheren Erläuterungen zu Ausführungsbeispielen anhand von Zeichnungen ersichtlich.

Es zeigen:
- Figur 1: einen Durchflußumrichter mit selbstgesteuerten Gleichrichtern,
- Figuren 2a-2i: Pulsdiagamme,
- Figur 3: einen weiteren Durchflußumrichter mit selbstgesteuerten Gleichrichtern,
- Figur 4: einen weiteren Durchflußumrichter mit selbstgesteuerten Gleichrichtern und
- Figur 5: eine Variante eines Durchflußumrichters mit selbstgesteuerten Gleichrichtern.

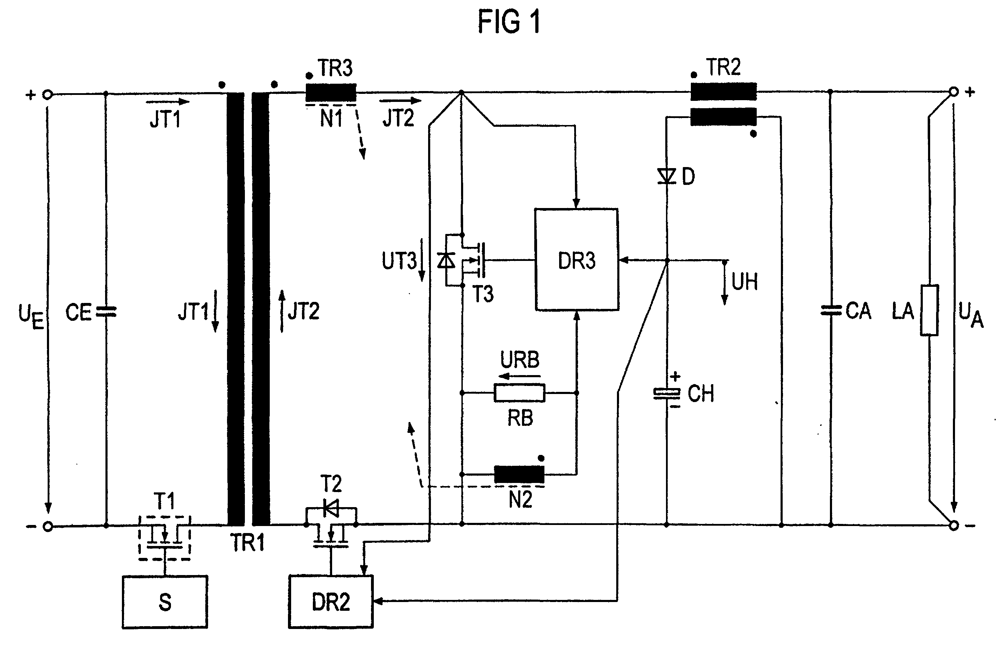

In Figur 1 ist ein Eintakt-Durchflußumrichter mit selbstgesteuerten Gleichrichtern dargestellt. Auf der Primärseite des Eintakt-Durchflußumrichters ist ein erstes Schaltelement T1, beispielsweise ein Feldeffekt-Transistor, angeordnet. Das erste Schaltelement T1 wird über eine erste Steuereinheit S angesteuert. In der ersten Steuereinheit S ist eine Pulsweitenmodulationsschaltung zur Ansteuerung des ersten Schaltelementes T1 angeordnet. Parallel zu den eingangsseitigen Anschlüssen des Eintakt-Durchflußumrichters ist ein Eingangskondensator CE angeordnet.

Zwischen einem Anschluß der sekundärseitigen Spule des Übertragers TR1 und einem ersten ausgangsseitigen Anschluß des Eintakt-Durchflußumrichters ist eine Sensoreinheit und eine Ausgangsdrossel TR2 in einem Hauptstrompfad angeordnet. Als Sensoreinheit wird in den nachfolgenden Schaltungsausgestaltungen ein Stromwandler TR3 verwendet. Zwischen einem weiteren Anschluß der sekundärseitigen Spule des Übertragers TR1 und einem zweiten ausgangsseitigen Anschluß des Eintakt-Durchflußumrichters ist ein zweites Schaltelement T2, z.B. ein MOS Feldeffekt-Transistor mit einer Body-Diode, angeordnet.

Ein drittes Schaltelement T3, z.B. ein MOS-Feldeffekt-Transistor mit einer Body-Diode, ist mit einem ersten Anschluß zwischen dem Stromwandler TR3 und der Ausgangsdrossel TR2 und mit einem zweiten Anschluß am ersten Anschluß des zweiten Schaltelementes T2 verbunden. Der Steuereingang des zweiten Schaltelementes T2 ist mit einer ersten Treiberschaltung DR2 verbunden. Die erste Treiberschaltung DR2 ist mit dem ersten Anschluß des dritten Schaltelementes T3 verbunden.

Eine mit einem Steuereingang des dritten Schaltelementes T3 verbundene zweite Treiberschaltung DR3 ist zum einen mit dem ersten Anschluß des dritten Schaltelementes T3 und zum anderen mit einem zweiten Anschluß des dritten Schaltelementes T3 über eine Parallelschaltung, bestehend aus einem Bürdenwiderstand RB und der sekundärseitigen Spule N2 des Stromwandlers TR3 verbunden.

Am Ausgang des Durchflußwandlers ist ein Abschlußkondensator CA parallel zu den Ausgangsklemmen des Eintakt-Durchflußwandlers angeordnet.

Auf der Sekundärseite des Eintakt-Durchflußumrichters ist eine Einheit zur Erzeugung einer Hilfsspannung UH angeordnet. Diese Einheit wird gebildet durch die Ausgangsdrossel TR2, einer Diode D und einem Elektrolyt-Kondensator CH. Die Ausgangsspannung UA wird durch die Ausgangsdrossel TR2 für eine Hilfsspannung UH übersetzt. In dieser und den weiteren Schaltuhgsanordnungen ist die Hilfsspannung UH konstant. Die Hilfsspannung UH soll etwa 10 Volt betragen. Mit ihr wird das zweite Schaltelement T2 über die erste Treiberschaltung DR2 und das dritte Schaltelement T3 über die zweite Treiberschaltung DR3 angesteuert.

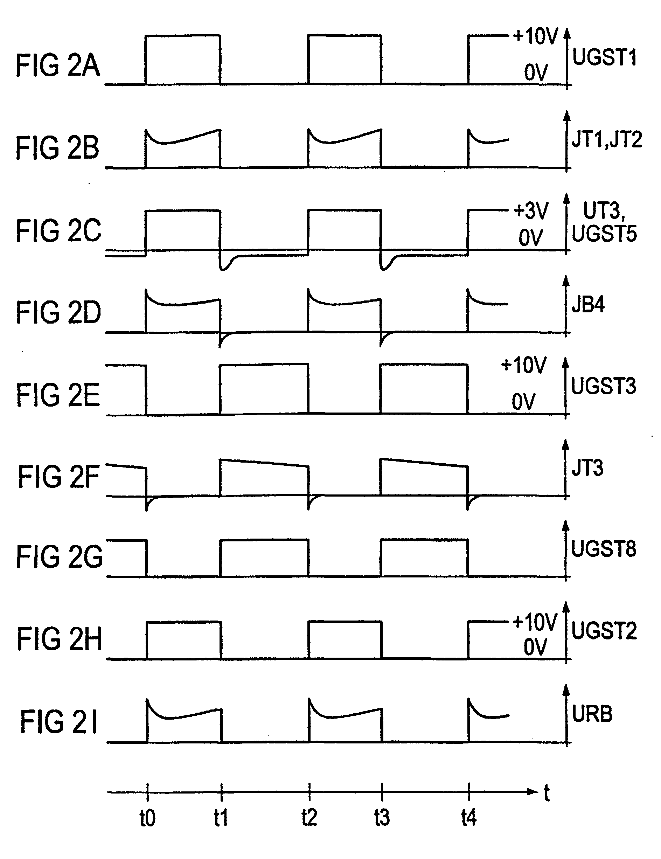

Nachfolgend das Schaltverhalten des Eintakt-Durchflußwandlers gemäß der Erfindung mit Verweisen auf Pulsdiagramme, die in der Figur 2 abgebildet sind.

Das Schaltverhalten des Eintakt-Durchflußwandlers zu den Einschaltezeitpunkten t0, t2, t4 des ersten Schaltelementes T1:

Wenn das erste Schaltelement T1 durch ein Steuersignal der Steuerschaltung S eingeschaltet wird, beginnt mit dem Strom IT1 auf der Primärseite des Übertragers TR1 auch der Strom IT2 auf der Sekundärseite des Übertragers TR1 zu fließen.

Kurzzeitig ist nach den genannten Zeitpunkten in denen die Laststromstrecke des ersten Schaltelementes T1 bereits niederohmig ist, das dritte Schaltelement T3 noch in der Funktion einer Freilaufdiode und führt den Freilaufstrom des Ausgangskreises. Der Stromkreis schließt sich über die Body-Diode des gesperrten zweiten Schaltelementes T2. Das dritte Schaltelement T3 bildet in dieser Phase einen Kurzschluß. Der steil ansteigende Strom IT2 durch das dritte Schaltelement T3 ist nur begrenzt durch die Streuinduktivitäten beider Stromkreise und des Übertragers TR1.

Der Strom IT2 fließt entgegengesetzt dem durch die Ausgangsdrossel TR2 eingeprägten Freilaufstrom im dritten Schaltelement T3 (Fig. 2b, 2f). Die Spannung an der Laststromstrecke des dritten Schaltelementes T3 verändert sich unmerklich.

Mit dem schnell ansteigenden Strom IT2 auf der Sekundärseite des Übertragers TR1 wird entsprechend des Übersetzungsverhältnisses N1 zu N2 des Stromwandlers TR3 auch eine Bürdenspannung URB (Fig. 2i) an dem Bürdenwiderstand RB erzeugt. Diese am Bürdenwiderstand RB anliegende Bürdenspannung URB bildet das Abschaltekriterium für das dritte Schaltelement T3. Die zweite Treiberschaltung DR3 wird entsprechend getriggert und sperrt das dritte Schaltelement T3.

Wenn das dritte Schaltelement T3 sperrt, steigt auch die Spannung UT3 auf den übersetzten Wert der Eingangsspannung UE. Das zweite Schaltelement T2 wird über die erste Treiberschaltung DR2 angesteuert und die Laststromstrecke des zweiten Schaltelementes T2 niederohmig.

Sobald das dritte Schaltelement T3 gesperrt ist, ist der Kommutierungsvorgang auf der Sekundärseite des Übertragers TR1 abgeschlossen, und das zweite Schaltelement T2 übernimmt den Strom IT2. Die Stromführung des Stromes IT2 auf der Sekundärseite des Übertragers TR1 erfolgt über die Ausgangsdrossel TR2 über einen Verbraucher und die niederohmige Laststromstrecke des zweiten Schaltelementes T2.

Das Schaltverhalten des Eintakt-Durchflußwandlers während der niederohmig gesteuerten Laststromstrecke des ersten Schaltelementes in den Zeitintervallen t0-t1, t2-t3, .. :

In Figur 2a ist die Spannung UGST1 am Steuereingang des ersten Schaltelementes T1 und in Figur 2h die Steuerspannung UGST2 und die Spannung an der Laststromstrecke des zweiten Schaltelementes T2 wiedergegeben.

Wenn die Laststromstrecke des ersten Schaltelementes T1 niederohmig ist, dann ist auch die Laststromstrecke des zweiten Schaltelement T2 auf der Sekundärseite des Eintakt-Durchflußumrichters niederohmig.

Der auf der Primärseite des Eintakt-Durchflußumrichters eingeprägte Strom IT1 wird durch den Übertrager TR1 in einen Strom IT2 auf der Sekundärseite des Übertragers TR1 übersetzt. Der Strom IT2 fließt durch den Stromwandler TR3 und die Ausgangsdrossel TR2.

Für die Ansteuerung der ersten und zweiten Treiberschaltung DR2, DR3 wird die an der Laststromstrecke des dritten Schaltelementes T3 anliegende Spannung UT3 verwendet. Diese Spannung UT3 ändert sich mit dem Wert der Eingangsspannung UE unter Berücksichtigung des Übersetzungsverhältnisses des Übertragers TR1 direkt proportional. Die Spannung UT3 ist im Wesentlichen eine Rechteckwechselspannung (Fig. 2c).

Das Schaltverhalten des Eintakt-Durchflußumrichters zu den Zeitpunkten t1, t3, ... , an denen die Laststromstrecke des ersten Schaltelementes T1 hochohmig wird:

Im ersten Moment übernimmt die zwischen dem zweiten und ersten Anschluß des dritten Schaltelementes T3 angeordnet Body-Diode den Stromfluß. Damit bricht aber die Spannung von UT3 zusammen. Ein Abschalten des zweiten Schaltelementes T2 und Einschalten des dritten Schaltelementes T3 sind die Folge.

Im Moment des Sperrens des ersten Schaltelementes T1 reduziert sich der Strom IT1 und IT2 auf Null Ampere. Die Spannung an dem dritten Schaltelement T3 springt von seinem maximalen positiven Wert auf einen leicht negativen Wert, da die Body-Diode von dem dritten Schaltelement T3 den vom Stromwandler TR3 eingeprägten Strom schlagartig übernimmt. Die Laststromstrecke des zweiten Schaltelementes T2 wird dadurch hochohmig geschaltet. Die Laststromstrecke des dritten Schaltelementes T3 wird niederohmig. Das dritte Schaltelement T3 wirkt als Freilaufdiode und übernimmt den durch die Ausgangsdrossel TR2 eingeprägten Freilaufstrom.

Zu den Zeitpunkten t1, t3, ... , während das erste Schaltelement T1 hochohmig wird (Fig. 2a), hat die Spannung UT3 über der Laststromstrecke des dritten Schaltelementes T3 eine geringe Spannung die bezogen auf den in Fig.1 gezeigten Spannungspfeil (Fig. 2c) einen negativen Wert aufweist. Der Freilaufstrom, der während dieser Phase durch das dritte Schaltelement T3 fließt, verursacht, da er vom zweiten zum ersten Anschluß des dritten Schaltelementes T3 fließt, eine Spannung an der Laststromstrecke des dritten Schaltelementes T3. Diese Spannung weist bezogen auf den in Fig. 1 eingezeichneten Spannungspfeil einen geringen negativen Wert auf.

Während das dritte Schaltelement T3 als Freilaufdiode wirkt, ist durch die Spannung UT3, die gegen null Volt geht, das dritte Schaltelement T3 voll durchgesteuert (Fig. 2c, Fig. 2e) .

Das Schaltverhalten des Eintakt-Durchflußumrichters zwischen den Zeitpunkten t1-t2, t3-t4:

Während dieser Zeitperioden wirkt das dritte Schaltelement T3 als Freilaufdiode. Das erste und zweite Schaltelement T1, T2 ist gesperrt.

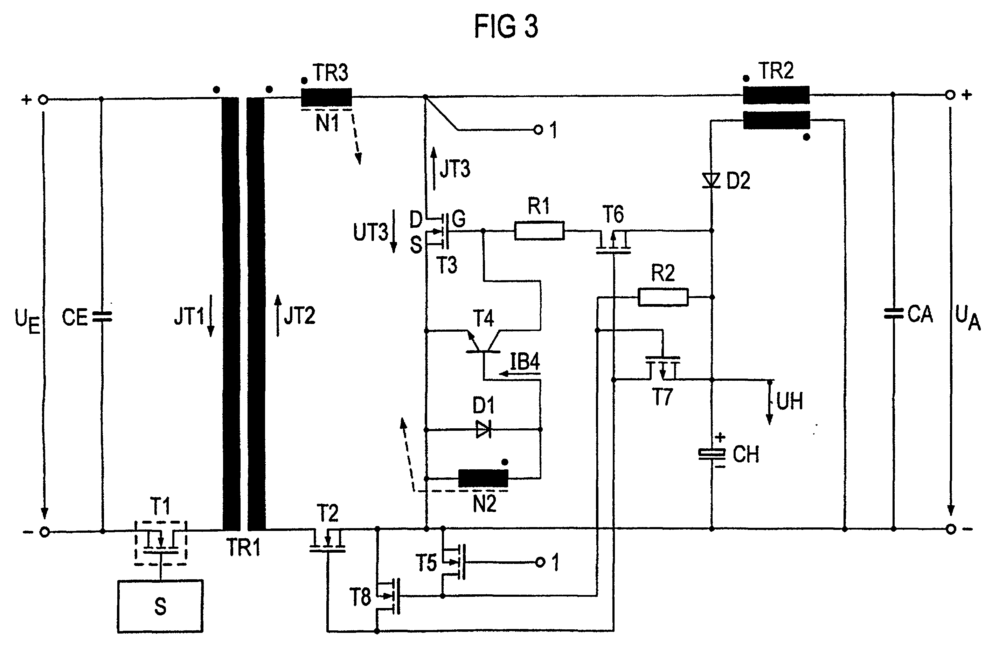

In Figur 3 ist eine Ausgestaltung der in Fig. 1 dargestellten Schaltung dargestellt. Im Unterschied zur Schaltungsausgestaltung nach Figur 1 ist die erste Treiberschaltung DR2 durch einen fünften, achten und siebten Feldeffekt-Transistor T5, T8 und T7, die zweite Treiberschaltung DR3 durch einen sechsten Feldeffekt-Transistor T6 und der Bürdenwiderstand durch eine erste Diode D1 und ein viertes Schaltelement T4, das z.B. ein Bipolartransistor sein kann, ersetzt. Die Kathode der Diode D1 ist mit Steuereingang des Bipolartransistors T4 verbunden.
Die erste Diode D1 ist parallel zur zweiten Wicklung N2 des Stromwandlers TR3 angeordnet. Parallel zur ersten Diode D1 ist eine Basis-Emitterstrecke des Bipolartransistors T4 angeordnet. Der Emitteranschluß des Bipolartransistors T4 ist mit dem Sourceanschluß S und der Kollektoranschluß des Bipolartransistor T4 mit dem Steuereingang G des dritten Schaltelementes T3 verbunden. Ein Steuereingang des fünften Feldeffekt-Transistors T5 ist mit einem ersten Anschluß D des dritten Schaltelementes T3 und der Drainanschluß des fünften Feldeffekt-Transistors T5 mit einem Steuereingang des achten Feldeffekt-Transistors T8 verbunden. Die Laststromstrecke des achten Feldeffekt-Transistors T8 verläuft parallel zur Steuerstrecke des zweiten Schaltelementes T2. Der Steuereingang des achten Feldeffekt-Transistors T8 ist mit einem Steuereingang des siebten Feldeffekt-Transistors T7 sowie über einen Widerstand R2 mit der Hilfsspannungsquelle UH verbunden. Der Steuereingang des zweiten Schaltelementes T2 ist mit einen Steuereingang des sechsten Feldeffekt-Transistors T6 sowie einem Drainanschluß des siebten Feldeffekt-Transistors T7 verbunden. Eine Verbindung zwischen dem Steuereingang des dritten Schaltelementes T3 und der Hilfsspannungsquelle UH wird durch die Laststromstrecke des sechsten Feldeffekt-Transistors T6 und dem Widerstand R1 hergestellt.

Die nachfolgende Funktionsbeschreibung beschränkt sich auf die Schaltungsvorgänge zu den Zeitpunkten t0, t2, t4, .., wie sie in Fig.2a-2i angedeutet sind.

Nachdem die Laststromstrecke des ersten Schaltelementes T1 niederohmig geworden ist und der Strom IT2 auf der Sekundärseite des Umrichters fließt, soll das dritte Schaltelement T3, das jeweils in den vorangegangenen Zeitabschnitten t1-t2, t3-t4 als Freilaufdiode im Sekundärkreis des Übertragers TR1 gewirkt hat, sperren. In der Sekundärwicklung N2 des Stromwandlers TR3 wird der Strom IT2 durch das Wicklungsverhältnis N1/N2 des Stromwandlers TR3 in den Strom IB4 übersetzt (Fig. 2d). Der Strom IB4 fließt in die Basis des Bipolartransistors T4 und macht diesen leitend. Auf diese Weise wird die Gate-Source-Strecke GS des dritten Schaltelementes T3 kurzgeschlossen, bzw. auf die Restspannung zwischen Emitter und Kollektor des Bipolartransistors T4 reduziert. Zuvor war der Steuereingang des dritten Schaltelementes T3 über die Laststromstrecke des sechsten Feldeffekt-Transistors T6 mit der Hilfsspannungsquelle UH verbunden. Der in der Ansteuerstrecke angeordnete Widerstand R1 hat einen relativ niederohmigen Widerstandswert. Der Widerstand R1 wird zur Erzeugung einer Spannungsdifferenz benötigt, wenn der Bipolartransistor T4 leitend wird. Kurz nachdem der Strom IT2 durch die Primärwicklung N1 des Stromwandlers TR3 fließt wird die Steuerstrecke SG des dritten Schaltelementes T3 kurzgeschlossen, und die Laststromstrecke SD des dritten Schaltelementes T3 wird hochohmig. Wenn das dritte Schaltelement T3 sperrt, ist auch die Spannung zwischen den Zeitintervallen to-t1, t2-t3 hoch wie in Fig.2c gezeigt. Zum Zeitpunkt des Sperrens des dritten Schaltementes T3 liegt die Spannung UT3 an der hochohmigen Laststromstrecke SD des dritten Schaltelementes T3 an. Die Spannung UT3 entspricht der durch den Übertrager TR1 übersetzten Eingangsspannung UE. Das zweite Schaltelement T2 wird über den fünften Feldeffekt-Transistor T5, der den Kurzschluß des achten Feldeffekt-Transistors T8 aufhebt, leitend gesteuert. Über die Laststromstrecke des siebten Transistors T7 ist die Hilfsspannung UH an dem Steuereingang des zweiten Schaltelementes T2 angelegt.

Durch die erste Diode D1 kann, wenn der Strom IT2 unterbrochen ist, der Magnetisierungsstrom über die Sekundärwicklung N2 des Stromwandlers TR3 abgebaut werden.

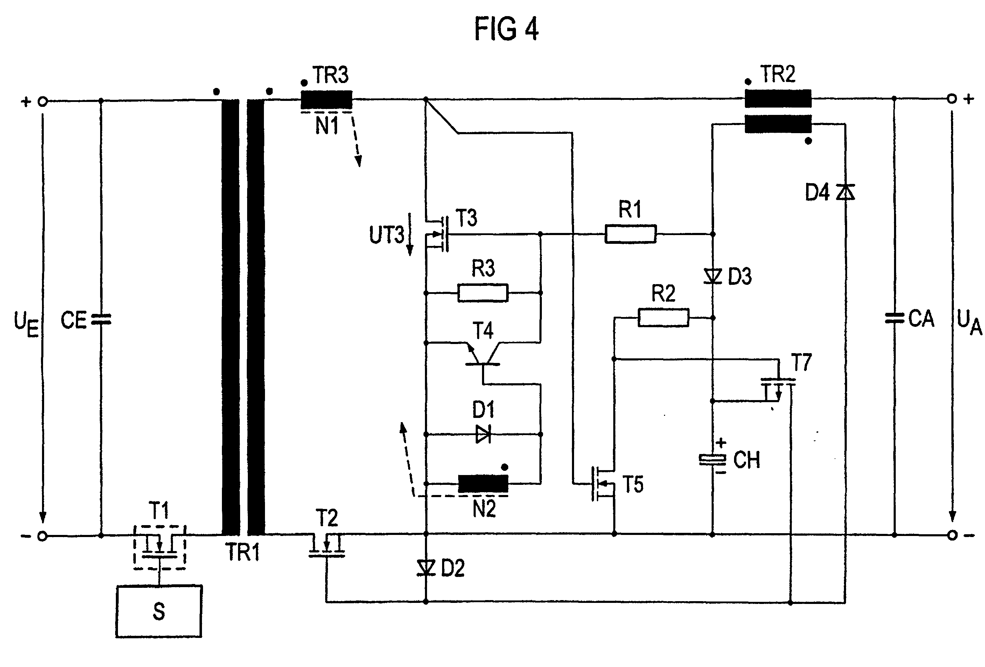

In Figur 4 ist eine weitere Variante eines Eintakt-Durchflußumrichters mit selbststeuernden Gleichrichtern gezeigt. Diese Variante unterscheidet sich von der in Figur 3 gezeigten dadurch, daß die Spannung an der Hilfswicklung der Ausgangsdrossel TR2 auch zur Ansteuerung des dritten Schaltelementes T3 mit einer positiven Spannung verwendet wird.

Wenn das erste Schaltelement T1 sperrt und die Kommutierung auf das dritte Schaltelement T3 erfolgt, liegt an der Ausgangsdrossel TR2 die Ausgangsspannung UA abzüglich der am Stromwandler TR3 anliegenden Spannung. Diese Ausgangsspannung UA wird auf die Hilfswicklung der Ausgangsdrossel TR2 übersetzt. Mit dieser Spannung wird das Gate des dritten Schaltelementes T3 angesteuert. Die Ansteuerung des Steuereinganges G des dritten Schaltelementes T3 erfolgt über den Widerstand R1 und dauert während die Laststromstrecke des ersten Schaltelement T1 hochohmig ist. Beim Einschalten des ersten Schaltelementes T1 wird das dritte Schaltelement T3, wie in Figur 3 beschrieben, über den Stromwandler TR3, den Bipolartransistor T4 definiert abgeschaltet.

Der fünfte und siebte Transistor T5, T7 dient dazu, für das zweite Schaltelement T2 eine definierte Ansteuerspannung zu erzeugen.

Abgeschaltet wird das zweite Schaltelement T2 beim Einschalten des dritten Schaltelementes T3. Der Sperrzustand des zweiten Schaltementes T2 wird durch die Widerstände R1 und R3 und die Dioden D2, D4 sowie die Hilfswicklung der Ausgangsdrossel TR2 aufrecht erhalten, solange das dritte Schaltelement T3 die Funktion einer Freilaufdiode übernimmt. Bei einem Polaritätswechsel an der Hilfswicklung der Ausgangsdrossel TR2 wird die an der Hilfswicklung anliegende Spannung durch die Diode D4 von der Schaltung entkoppelt.

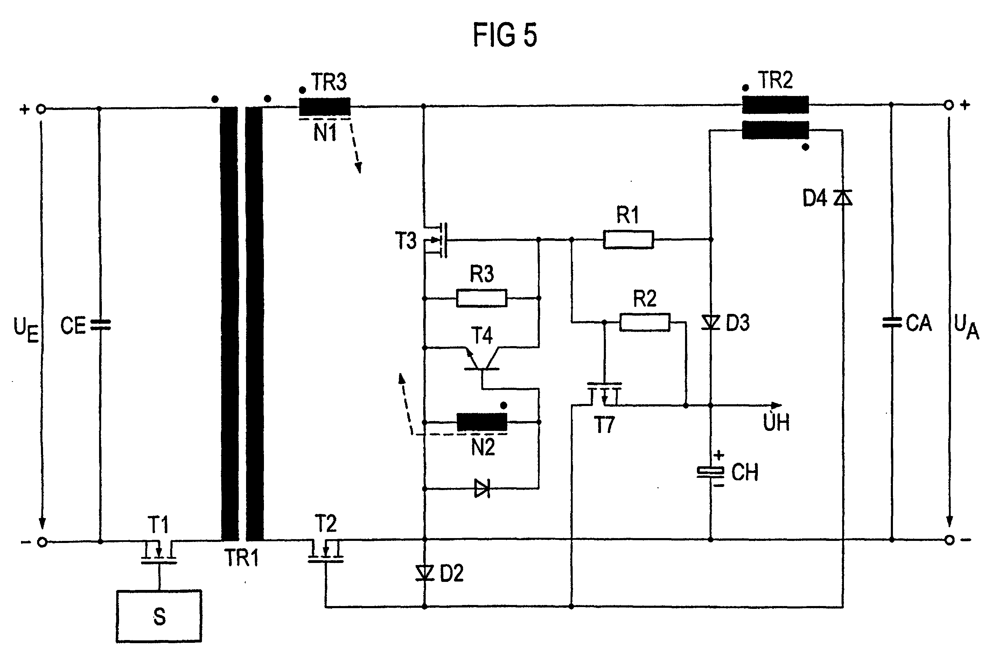

In Figur 5 ist eine weitere Variante der in Figur 4 gezeigten Schaltungsausgestaltung dargestellt. In Figur 5 wurde der fünfte Transistor T5 eingespart. Über den leitend gesteuerten siebten Transistor T7 wird das zweite Schaltelement T2 mit der am Gate des dritten Schaltelementes T3 anliegenden Spannung leitend gesteuert. Diese Spannung liegt dann an dem Gate des dritten Schaltelementes T3 an, wenn wie bereits oben beschrieben der Bipolartransistor T4 leitend wird und die Gate-Sourcespannung des dritten Schaltelementes T3 auf die Emitter-Kollektorspannung des Bipolartransistors T4 reduziert wird. Die am Gate des dritten Schaltelementes T3 anliegende Spannung liegt auch am Gate des siebten Transistors T7, einem P-Kanal Transistor, an. Nachdem die Laststromstrecke des siebten Transistors T7 leitend wird, liegt die Hilfsspannung UH am Gate des zweiten Schaltelementes T2. So lange der Strom IT2 durch die Spule N1 des Stromwandlers TR3 fließt, wird auch die Basis des Bipolartransistors T4 angesteuert, und das dritte Schaltelement T3 bleibt definiert gesperrt. Nach dem Kommutierungsvorgang selbst bleibt auch der Widerstand R1 stromlos, denn in diesem Schaltzustand hat sich die Polarität der Spannung an der Hilfswicklung der Ausgangsdrossel TR2 umgekehrt, so daß dieser Teil der Schaltung stromlos bleibt.

Die Primärwicklung des Stromwandlers TR3, der das Abschaltekriterium für das dritte Schaltelement T3 liefert, kann auch im Primärkreis des Übertragers TR1 angeordnet werden.

## Patentansprüche

1. Schaltungsanordnung zur selbstgesteuerten Gleichrichtung in Umrichtern mit einer auf der Primärseite eines Übertragers (TR1) anliegenden Wechselspannung, einem ersten Schaltelement (T1) auf der Primärseite und einem zweiten und dritten Schaltelement (T2, T3) auf der Sekundärseite des Übertragers (TR1), wobei das dritte Schaltelement (T3) mit seiner Laststromstrecke parallel mit der sekundärseitigen Spule des Übertragers (TR1) verbunden ist und das zweite Schaltelement (T2) mit seiner Laststromstrecke in einem Hauptstrompfad zwischen einem Anschluß der sekundärseitigen Spule und einem ersten Anschluß der Laststromstrecke des dritten Schaltelementes (T3) angeordnet ist, und der Steuereingang des zweiten Schaltelementes (T2) mit dem zweiten Anschluß des dritten Schaltelementes (T3) durch eine erste Treiberschaltung (DR2) verbunden ist,
**dadurch gekennzeichnet,**
**daß** eine Sensoreinheit (TR3) zur Ermittlung eines Stromflusses auf der Primär- oder Sekundärseite des Übertragers (TR1) vorgesehen ist, wobei ein bei einem Stromfluß von der Sensoreinheit (TR3) abgegebenes Steuersignal den Steuereingang des dritten Schaltelementes (T3) unmittelbar angelegt und dadurch die Laststromstrecke des dritten Schaltelementes (T3) hochohmig geschaltet wird.

2. Schaltungsanordnung nach Anspruch 1,
**dadurch gekennzeichnet,**
**daß** die Sensoreinheit eine Stromwandlereinheit (TR3) ist.

3. Schaltungsanordnung nach Anspruch 2,
**dadurch gekennzeichnet,**
**daß** die Stromwandlereinheit (TR3) eine primärseitige Spule (N1) und eine sekundärseitige Spule (N2) aufweist mit einem parallel zur sekundärseitigen Spule (N2) angeordneten Bürdenwiderstand (RB) zur Erzeugung eines Steuersignals aufweist, wobei die primärseitige Spule (N1) in einem Hauptstrompfad auf der Primär- oder Sekundärseite des Übertragers (TR1) angeordnet ist.

4. Schaltungsanordnung nach Anspruch 1,
**dadurch gekennzeichnet,**
**daß** eine Ausgangsdrossel (TR2) mit einer zweiten Wicklung zur Erzeugung einer konstanten Hilfsspannung (UH) vorgesehen ist.

5. Schaltungsanordnung nach Anspruch 2,
**dadurch gekennzeichnet,**
**daß** parallel zur sekundärseitigen Spule (N2) der Stromwandlereinheit (TR3) eine erste Diode (D1) und eine Steuerstrecke eines Bipolartransistors (T4) angeordnet ist, wobei bei einem Stromfluß der Bipolartransistor (T4) durchgesteuert wird und das an der Steuerstrecke des Bipolartransistors anliegende Steuersignal das dritte Schaltelement sperrt.

6. Schaltungsanordnung nach Anspruch 1,
**dadurch gekennzeichnet,**
**daß** jeweils eine Treiberschaltung (DR2, DR3) zur Ansteuerung des zweite und dritte Schaltelementes (T2, T3) vorgesehen ist.

7. Verfahren zur selbstgesteuerten Gleichrichtung in Umrichtern mit einer auf der Primärseite eines Übertragers (TR1) anliegenden Wechselspannung, mit einem ersten Schaltelement (T1) auf der Primärseite und einem zweiten und dritten Schaltelement (T2, T3) auf der Sekundärseite des Übertragers (TR1), wobei das dritte Schaltelement (T3) mit seiner Laststromstrecke parallel mit der sekundärseitigen Spule des Übertragers (TR1) verbunden wird, und das zweite Schaltelement (T2) mit seiner Laststromstrecke in einem Hauptstrompfad zwischen einem Anschluß der sekundärseitigen Spule und einem ersten Anschluß der Laststromstrecke des dritten Schaltelementes (T3) angeordnet wird und der Steuereingang des zweiten Schaltelementes (T2) mit dem zweiten Anschluß des dritten Schaltelementes (T3) durch eine erste Treiberschaltung (DR2) verbunden wird,
**dadurch gekennzeichnet,**
**daß** bei einem Stromfluß in der Primär- oder Sekundärseite ein Steuersignal erzeugt und damit unmittelbar das dritte Schaltelement (T3) angesteuert und dadurch die Laststromstrecke hochohmig geschaltet wird.

## Claims

1. Circuit arrangement for self-controlled rectification in converters with an AC voltage present on the primary side of a transformer (TR1),
a first switching element (T1) on the primary side and a second and third switching element (T2, T3) on the secondary side of the transformer (TR1), the third switching element (T3) being connected with its load current path in parallel with the secondary-side coil of the transformer (TR1) and the second switching element (T2) being arranged with its load current path in a main current path between a connection of the secondary-side coil and a first connection of the load current path of the third switching element (T3), and
the control input of the second switching element (T2) is connected to the second connection of the third switching element (T3) by a first driver circuit (DR2),
**characterized**
**in that** provision is made of a sensor unit (TR3) for determining a current flow on the primary or secondary side of the transformer (TR1), a control signal output by the sensor unit (TR3) in the event of a current flow being directly applied to the control input of the third switching element (T3) and the load current path of the third switching element (T3) thereby being switched to high impedance.

2. Circuit arrangement according to Claim 1,
**characterized**
**in that** the sensor unit is a current transformer unit (TR3).

3. Circuit arrangement according to Claim 2,
**characterized**
**in that** the current transformer unit (TR3) has a primary-side coil (N1) and a secondary-side coil (N2), with a burden resistance (RB) arranged in parallel with the secondary-side coil (N2) and serving for generating a control signal, the primary-side coil (N1) being arranged in a main current path on the primary or secondary side of the transformer (TR1).

4. Circuit arrangement according to Claim 1,
**characterized**
**in that** provision is made of an output inductor (TR2) with a second winding for generating a constant auxiliary voltage (UH).

5. Circuit arrangement according to Claim 2,
**characterized**
**in that** a first diode (D1) and a control path of a bipolar transistor (T4) are arranged in parallel with the secondary-side coil (N2) of the current transformer unit (TR3), in which case, in the event of a current flow, the bipolar transistor (T4) is turned on and the control signal present on the control path of the bipolar transistor turns the third switching element off.

6. Circuit arrangement according to Claim 1,
**characterized**
**in that** provision is made of a respective driver circuit (DR2, DR3) for driving the second and third switching elements (T2, T3).

7. Method for self-controlled rectification in converters with an AC voltage present on the primary side of a transformer (TR1),
a first switching element (T1) on the primary side and a second and third switching element (T2, T3) on the secondary side of the transformer (TR1), the third switching element (T3) being connected with its load current path in parallel with the secondary-side coil of the transformer (TR1) and the second switching element (T2) being arranged with its load current path in a main current path between a connection of the secondary-side coil and a first connection of the load current path of the third switching element (T3), and
the control input of the second switching element (T2) is connected to the second connection of the third switching element (T3) by a first driver circuit (DR2),
**characterized**
**in that**, in the event of a current flow in the primary or secondary side, a control signal is generated and, as a result, the third switching element (T3) is driven directly and the load current path is thereby switched to high impedance.

## Revendications

1. Montage destiné au redressement autorégulé dans des convertisseurs soumis à une tension alternative appliquée au primaire d'un transformateur (TR1),
comportant un premier circuit logique (T1) au primaire et un deuxième et troisième circuit logique (T2, T3) au secondaire du transformateur (TR1), le troisième circuit logique (T3) étant relié, par sa ligne de courant de charge, en parallèle sur la bobine secondaire du transformateur (TR1) et le deuxième circuit logique (T2) étant placé par sa ligne de courant de charge sur un cheminement du courant principal entre une borne de la bobine secondaire et une première borne de la ligne de courant de charge du troisième circuit logique (T3) et l'entrée de commande du deuxième circuit logique (T2) étant reliée, par un premier circuit pilote (DR2) à la deuxième borne du troisième circuit logique (T3)
**caractérisé par le fait**
**qu'**une unité capteur (TR3) est prévue pour détecter une conduction de courant au primaire ou au secondaire du transformateur (TR1), un signal de commande, émis, dans le cas d'une conduction de courant, par l'unité capteur (TR3), étant appliqué directement à l'entrée de commande du troisième circuit logique (T3) et, par voie de conséquence, la ligne de courant de charge du troisième circuit logique (T3) étant commutée à haute impédance.

2. Montage selon la revendication 1
**caractérisé par le fait**
**que** l'unité capteur est une unité convertisseur de courant (TR3).

3. Montage selon la revendication 2
**caractérisé par le fait**
**que** l'unité convertisseur de courant (TR3) comporte, pour la génération du signal de commande, une bobine primaire (N1) et une bobine secondaire (N2) avec une résistance de charge (RB) montée en parallèle sur la bobine secondaire (N2), la bobine primaire (N1) étant disposée sur un cheminement du courant principal au primaire ou au secondaire du transformateur (TR1).

4. Montage selon la revendication 1
**caractérisé par le fait**
**qu'**est prévue une self de sortie (TR2) avec un deuxième enroulement pour la génération d'une tension auxiliaire constante (UH).

5. Montage selon la revendication 2
**caractérisé par le fait**
**que**, en parallèle sur la bobine secondaire (N2) de l'unité convertisseur de courant (TR3), sont placées une première diode (D1) et une ligne de commande d'un transistor bipolaire (T4), le transistor bipolaire (T4) étant, dans le cas d'une conduction de courant, complètement ouvert et le signal de commande appliqué sur la ligne de commande du transistor bipolaire verrouillant la troisième circuit logique.

6. Montage selon la revendication 1
**caractérisé par le fait**
**que**, pour l'excitation du deuxième et du troisième circuit logique (T2, T3), un circuit pilote (DR2, DR3) est prévu pour chacun d'eux.

7. Procédé destiné au redressement autorégulé dans des convertisseurs soumis à une tension alternative appliquée au primaire d'un transformateur (TR1),
comportant un premier circuit logique (T1) au primaire et un deuxième et troisième circuit logique (T2, T3) au secondaire du transformateur (TR1), le troisième circuit logique (T3) étant relié, par sa ligne de courant de charge, en parallèle sur la bobine secondaire du transformateur (TR1) et le deuxième circuit logique (T2) étant placé, par sa ligne de courant de charge, sur un cheminement du courant principal entre une borne de la bobine secondaire et une première borne de la ligne de courant de charge du troisième circuit logique (T3) et l'entrée de commande du deuxième circuit logique (T2) étant reliée, par un premier circuit pilote (DR2), à la deuxième borne du troisième circuit logique (T3)
**caractérisé par le fait**
**que**, dans le cas d'une conduction de courant au primaire ou au secondaire, un signal de commande est généré et, ainsi, le troisième circuit logique (T3) est excité directement et, par voie de conséquence, la ligne de courant de charge est commutée à haute impédance.
